# EUROPÄISCHE PATENTSCHRIFT

(11) **EP 0 682 205 B1**
(45) Veröffentlichungstag und Bekanntmachung des Hinweises auf die Patenterteilung: **04.08.1999**
(21) Anmeldenummer: 95890089.6
(22) Anmeldetag: 08.05.1995
(51) Int. Cl.: F16L 55/26, F16L 55/28

(54) **In einem rohrförmigen Bauwerk verfahrbare Vorrichtung zur Bearbeitung und/oder Inspektion der Wände**
Mobile device for working and/or inspecting the walls of a tubular structure
Dispositif mobile pour travaux et/ou inspecter des parois d'une structure tubulaire

(30) Priorität: 11.05.1994 AT 99094
(43) Veröffentlichungstag der Anmeldung: 15.11.1995
(73) Patentinhaber: KÜBEL, Johann, A-3072 Kasten 12 (AT)
(72) Erfinder: KÜBEL, Johann, A-3072 Kasten 12 (AT)
(74) Vertreter: Brauneiss, Leo, Dipl.Ing.

(56) Entgegenhaltungen:
- EP-A- 0 461 964
- US-A- 5 044 824

## Beschreibung

Die Erfindung betrifft eine in einem rohrförmigen Bauwerk, wie einem Kanal, einer Wasserleitung, einer Erdbohrung od.dgl. verfahrbaren Vorrichtung zur Bearbeitung und/oder Inspektion der Wände des Bauwerkes, mit einem mittels einer Verstelleinrichtung verstellbaren Träger, an dem ein Arm schwenkbar befestigt ist, an welchem Bearbeitungswerkzeuge, beispielsweise Fräser, Greifer od.dgl. und eine, insbesondere von einer Kamera gebildete Inspektionseinrichtung verstellbar gelagert sind.

Um beispielsweise Sanierungsarbeiten in Kanälen vorzunehmen, ist es bereits bekannt, in Kanalabschnitten zwischen benachbarten Inspektionsschächten Wagen zu verfahren, die mit den erforderlichen Werkzeugen und Einrichtungen versehen sind. Bei den bekannten Vorrichtungen werden diese Wagen in den Kanalabschnitten mittels eines Seilzuges über eine obertage angeordnete Seilwinde gezogen. Eine kontinuierliche Arbeitsweise ist daher mit den bekannten Vorrichtungen nicht möglich, da die Seilwinden immer wieder versetzt werden müssen.

Bei den bekannten Vorrichtungen sind ferner die in der Regel pneumatisch angetriebenen Bearbeitungswerkzeuge nur um zwei Achsen schwenkbar mit dem Wagen verbunden, so daß aus diesem Grunde die Bearbeitung verschiedener Kanalprofile auf Schwierigkeiten stößt. Ein Abdichten von in den zu bearbeitenden Kanal einmündenden Queranschlüssen durch Setzen eines in diese Queranschlüsse einführbaren und aufblasbaren Balges ist mit den bekannten Vorrichtungen nicht möglich. Ein solches Abdichten der Queranschlüsse ist jedoch erforderlich, wenn die Gefahr besteht, daß während der Bearbeitung des Hauptkanales diesem über die Queranschlüsse plötzlich größere Mengen von Abwasser zugeführt werden, die dann die Vorrichtung überfluten würden.

Aus der WO-A1-93/05334 ist bereits eine Vorrichtung zur Innenbearbeitung von nicht begehbaren Leitungsrohren bekannt geworden, die einen mittels einer Verstelleinrichtung verstellbaren Träger aufweist, an dem ein einen Fräser tragender Arm schwenkbar befestigt ist und eine Videokamera verstellbar gelagert ist. Diese bekannte Vorrichtung besteht aus drei miteinander gekuppelten Teilen und ist daher sehr lang und somit unhandlich. Dadurch wird das Einbringen über einen in der Regel unter einem Meter Durchmesser aufweisenden Schacht in das zu bearbeitende Leitungsrohr schwierig.

Die vorliegende Erfindung hat sich zur Aufgabe gestellt, die Nachteile der bekannten Vorrichtungen zu vermeiden und eine Vorrichtung zur Bearbeitung und/oder Inspektion der Wände von rohrförmigen Bauwerken zu schaffen, die universeller einsetzbar und leichter zu bedienen ist und mit welcher vor allem auch die Bearbeitung von quer zur Richtung des rohrförmigen Bauwerkes in dieses einmündende Anschlüsse erleichtert wird. Zur Lösung dieser Aufgabe schlägt die Erfindung vor, daß der Träger von einem Rotor gebildet ist, der in einem einteiligen, mit Fahrwerken ausgestatteten Wagen drehbar gelagert ist, und daß die am Rotor befestigte Inspektionseinrichtung mit dem Arm zu gemeinsamer Schwenkbewegung gekoppelt ist. Dadurch, daß der Träger von einem Rotor gebildet ist, der in einem einteiligen Wagen drehbar gelagert ist, wird eine kompakte Ausbildung der erfindungsgemäßen Vorrichtung und vor allem auch der Verstelleinrichtung für den Rotor ermöglicht. Die in jeder Drehrichtung unbeschränkt vorhandene Verdrehungsmöglichkeit des Rotors ermöglicht eine Richtungsänderung des mit dem Rotor verbundenen Armes, so daß dieser auch in eine Lage gebracht werden kann, in der er in einen seitlich in das zu bearbeitende Bauwerk einmündenden Anschluß hineinragt und somit dieser Anschluß bearbeitet werden kann. Es ist beispielsweise möglich, mit dem am Arm befestigten Werkzeug in diesen einmündenden Anschluß hineinzufahren und dort mittels eines am Arm befestigten Greifers einen Balg anzubringen und aufzublasen, durch den eine Abdichtung dieses Anschlusses erfolgt, oder zumindest im Bereich der Einmündung des Anschlusses in das zu bearbeitende rohrförmige Bauwerk auch den Einmündungsbereich zu bearbeiten. Dies ist beispielsweise dann wichtig, wenn das zu bearbeitende Bauwerk, beispielsweise ein Kanal, mit einer neuen, abdichtenden Auskleidung versehen wird, da bei der Herstellung dieser Auskleidung die Einmündung des Anschlusses in den Kanal zumindest verengt, wenn nicht sogar verschlossen wird und daher nachträglich wieder auf den ursprünglichen Querschnitt erweitert werden muß.

Durch die Verstellung des Rotors mittels der Verstelleinrichtung und durch die Verstellung des am Träger befestigten Armes mittels einer weiteren Verstelleinrichtung wird bei entsprechender Betätigung der Verstelleinrichtungen, die beispielsweise über eine CNC-Steuerung erfolgen kann, weiters ermöglicht, jedes beliebige Rohrprofil im zu bearbeitenden Bauwerk herzustellen, also beispielsweise auch von der Kreisform abweichende Rundprofile, Eiprofile, Rechteckprofile od.dgl.

Dadurch, daß bei der erfindungsgemäßen Vorrichtung die am Rotor befestigte Inspektionseinrichtung mit dem das Bearbeitungswerkzeug tragenden Arm zu gemeinsamer Schwenkbewegung gekoppelt ist, wird der wesentliche Vorteil erzielt, daß bei einer Verschwenkung des Bearbeitungswerkzeuges die Inspektionseinrichtung je nach Einstellung entsprechend mehr oder weniger mitschwenkt, was bei der Bearbeitung einen bis zu 70% größeren Bildausschnitt der Bearbeitungsstelle ergibt.

Gemäß einer bevorzugten Ausführungsform der Erfindung ist der Träger mit dem Arm über ein Kardangelenk verbunden und es sind mindestens zwei Verstelleinrichtungen für die gesteuerte Verstellung des Kardangelenkes vorgesehen, so daß bei entsprechender Steuerung das freie Ende des Armes und damit auch das dort angeordnete Werkzeug bzw. die dort befindliche Einrichtung bei ihrer Bewegung jede gewünschte Konfiguration ausführen können.

Die Verstelleinrichtungen für den Träger und/oder für das Kardangelenk können erfindungsgemäß von, vorzugsweise durch einen druckmittelbetätigten Kolben, verschiebbaren Zahnstangen gebildet sein, in die am Träger bzw. am Kardangelenk vorgesehene Zähne eingreifen, so daß durch eine Verschiebung der Zahnstangen eine entsprechende Verstellung erfolgt. Es ist aber auch möglich, die Verstelleinrichtungen als druckmittelbetätigter Motor auszubilden, dessen Welle eine Verdrehung des Trägers und/oder des Kardangelenkes bewirkt.

Es hat sich als zweckmäßig erwiesen, wenn der Wagen rohrförmig ausgebildet ist und wenn die Fahrwerke vom Umfang des Rohres radial ausfahrbar angeordnet sind, wobei vorzugsweise zumindest ein Fahrwerk über einen druckmittelbetätigten Motor angetrieben ist. Bei dieser Ausführungsform kann der Wagen zunächst in das zu bearbeitende rohrförmige Bauwerk eingesetzt werden, worauf die Fahrwerke radial ausgefahren werden, bis sie, im wesentlichen gleichmäßig verteilt, an der Wandung des Bauwerkes anliegen. Dadurch ergibt sich eine Reibungserhöhung der angetriebenen Fahrwerke, so daß eine sichere Fortbewegung des Wagens gewährleistet ist und ein Durchrutschen vermieden wird, auch dann, wenn der Wagen die Versorungseinrichtungen wie Leitungen für das Hydraulikmedium und Stromversorgungsleitungen sowie Steuerkabel u.dgl. nachziehen muß. Eine gute und sichere Fortbewegungsmöglichkeit des Wagens ist dann erreicht, wenn die Fahrwerke von Raupen gebildet sind.

Zweckmäßig ist der Rotor innerhalb des rohrförmig ausgebildeten Wagens gelagert und es ist die Verstelleinrichtung für den Rotor gleichfalls innerhalb dieses Wagens angeordnet. Dadurch lassen sich die Abmessungen verringern.

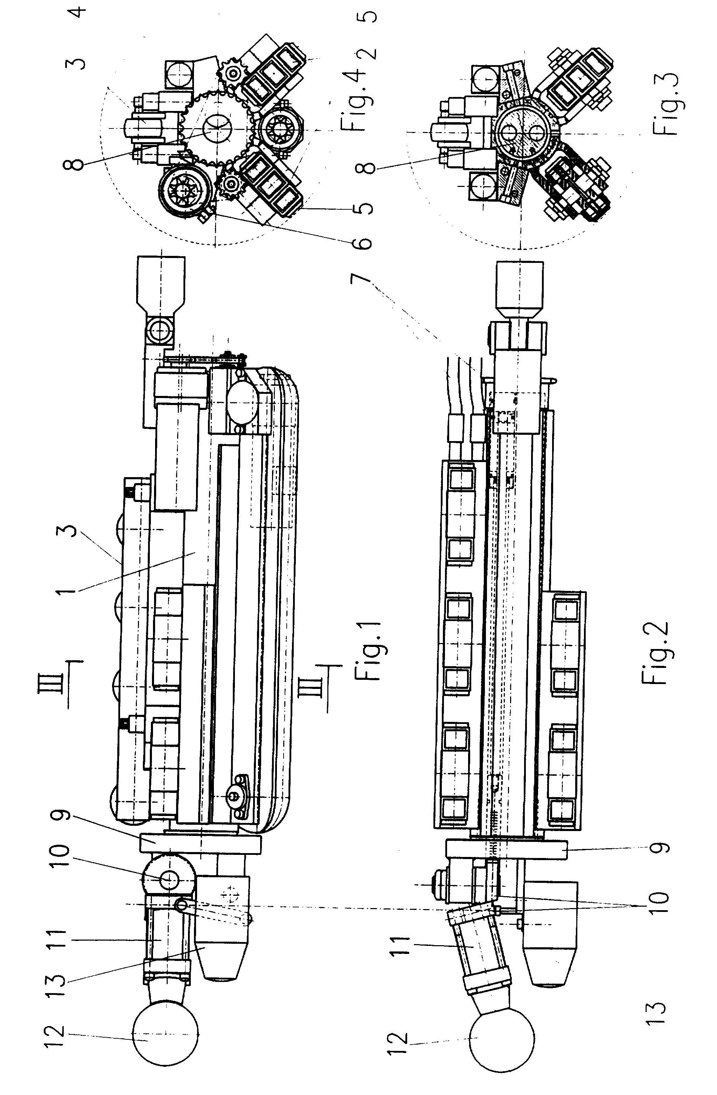

In der Zeichnung ist die Erfindung an Hand eines Ausführungsbeispieles schematisch veranschaulicht. Fig.1 zeigt eine erfindungsgemäße Vorrichtung in Seitenansicht und Fig.2 in Draufsicht. Fig.3 stellt einen Schnitt nach der Linie III-III in Fig.1 dar. Fig.4 zeigt eine Ansicht der erfindungsgemäßen Vorrichtung von hinten in Richtung des Pfeiles IV in Fig.1.

Die erfindungsgemäße Vorrichtung weist einen rohrförmig ausgebildeten Wagen 1 auf, von dessen Umfang drei über den Umfang gleichmäßig verteilte ausfahrbare Fahrwerke 2,3 abstehen. Bei der Darstellung in Fig.3 sind die beiden unteren Fahrwerke 2 ausgefahren, liegen somit am durch den Kreis 4 strichliert angedeuteten Kanalprofil an, wogegen sich das obere Fahrwerk 3 noch im eingefahrenen Zustand befindet. Die beiden unteren Fahrwerke weisen Antriebsraupen 5 auf, die durch einen Hydraulikmotor 6 angetrieben sind. Die Zufuhr des Hydraulikmediums erfolgt über Schläuche 7 von einem auf der Oberfläche abgestellten Versorgungswagen über einen Inspektionsschacht.

Innerhalb des den Wagen 1 bildenden Rohres ist ein Rotor 8 nach jeder Drehrichtung unbeschränkt beweglich gelagert, dessen Lage gleichfalls von einem Hydraulikmotor verstellt werden kann. Die Drehachse des Rotors 8 verläuft parallel zur Bewegungsrichtung des Wagens 1 im Kanalprofil 4.

Der Rotor 8 ist mit einer Platte 9 drehfest verbunden, auf der exzentrisch über ein Kardangelenk 10 ein Arm 11 allseits schwenkbar befestigt ist. Der Arm 11 wird von einem Hydraulikmotor gebildet, der das am Ende des Armes 11 befestigte, beispielsweise von einem Fräser 12 gebildete, lediglich schematisch angedeutete Werkzeug antreibt, über welches eine Bearbeitung der Wände des Kanalprofiles 4 erfolgt, um beispielsweise Ablagerungen abzutragen.

Die Verschwenkung des Kardangelenkes 10 erfolgt über Verstelleinrichtungen, die beispielsweise von in Bewegungsrichtung des Wagens 1 durch einen Hydraulikkolben verschiebbaren Zahnstangen gebildet sind, welche in entsprechende Zähne im Kardangelenk 10 eingreifen. Es kann aber auch hier die Verstelleinrichtung von einem hydraulischen Motor gebildet sein, dessen Welle eine Verdrehung des Kardangelenkes bewirkt.

Die Verstelleinrichtungen werden vorzugsweise von einer CNC-Steuerung gesteuert, wodurch ermöglicht wird, daß das Ende des Armes jede gewünschte geometrische Konfiguration ausführen kann.

Wie bereits erwähnt, trägt der Arm 11 an seinem Ende ein beispielsweise von einem Fräser 12 gebildetes Werkzeug. Es ist aber ohne Schwierigkeiten möglich, anstelle des Fräsers 12 auch andere Bearbeitungswerkzeuge vorzusehen, beispielsweise Greifer, mittels welcher ein aufblasbarer Balg in eine Einmündung in das zu bearbeitende Kanalprofil eingeführt werden kann, der nach erfolgtem Aufblasen ein Abdichten im Bereich dieser Einmündung bewirkt.

An der Platte 9 ist eine Fernsehkamera 13 schwenkbar befestigt, die mit dem Arm 11 zu gemeinsamer Schwenkbewegung gekoppelt ist und mit der daher der unmittelbare Arbeits- bzw. Inspektionsbereich aufgenommen wird. Die aufgenommenen Bilder werden über Signalleitungen zu dem an der Erdoberfläche befindlichen Montagewagen geleitet, wo sie auf Monitoren sichtbar gemacht werden. Von diesem Montagewagen erfolgt die gesamte Steuerung des Arbeitsvorganges und auch die Energie- und Druckmittelzufuhr.

## Patentansprüche

1. In einem rohrförmigen Bauwerk, wie einem Kanal, einer Wasserleitung, einer Erdbohrung od.dgl. verfahrbare Vorrichtung zur Bearbeitung und/oder Inspektion der Wände des Bauwerkes, mit einem mittels einer Verstelleinrichtung verstellbaren Träger (8), an dem ein Arm (11) schwenkbar befestigt ist, an welchem Bearbeitungswerkzeuge, beispielsweise Fräser (12), Greifer od.dgl. und eine, insbesondere von einer Kamera gebildete Inspektionseinrichtung verstellbar gelagert sind, dadurch gekennzeichnet, daß der Träger von einem Rotor (8) gebildet ist, der in einem einteiligen, mit Fahrwerken (2,3) ausgestatteten Wagen (1) drehbar gelagert ist, und daß die am Rotor (8) befestigte Inspektionseinrichtung (13) mit dem Arm (11) zu gemeinsamer Schwenkbewegung gekoppelt ist.

2. Vorrichtung nach Anspruch 1, dadurch gekennzeichnet, daß der Träger (8) mit dem Arm (11) über ein Kardangelenk (10) verbunden ist und daß zumindest zwei Verstelleinrichtungen für die gesteuerte Verstellung des Kardangelenkes (10) vorgesehen sind.

3. Vorrichtung nach Anspruch 1 oder 2, dadurch gekennzeichnet, daß die Verstelleinrichtungen für den Träger (8) und/oder für das Kardangelenk (10) von, vorzugsweise durch einen druckmittelbetätigten Kolben, verschiebbaren Zahnstangen gebildet sind, in die am Träger (8) bzw. am Kardangelenk (11) vorgesehene Zähne eingreifen.

4. Vorrichtung nach einem der Ansprüche 1 bis 2, dadurch gekennzeichnet, daß die Verstelleinrichtungen von einem druckmittelbetätigten Motor gebildet sind, dessen Welle eine Verdrehung des Trägers (8) und/oder des Kardangelenkes (11) bewirkt.

5. Vorrichtung nach einem der Ansprüche 1 bis 4, dadurch gekennzeichnet, daß der Wagen (1) rohrförmig ausgebildet ist, und daß die Fahrwerke (2,3) vom Umfang des Rohres radial ausfahrbar angeordnet sind, wobei vorzugsweise zumindest ein Fahrwerk über einen druckmittelbetätigten Motor angetrieben ist.

6. Vorrichtung nach einem der Ansprüche 1 bis 5, dadurch gekennzeichnet, daß die Fahrwerke (2) Antriebsraupen (5) aufweisen.

7. Vorrichtung nach einem der Ansprüche 1 bis 6, dadurch gekennzeichnet, daß der Rotor (8) innerhalb des rohrförmig ausgebildeten Wagens (1) gelagert ist, und daß die Verstelleinrichtung für den Rotor gleichfalls innerhalb des Wagens (1) angeordnet ist.

## Claims

1. Mobile device for working and/or inspecting the walls of a tubular structure, such as a channel, a water system, an earth bore or the like, comprising a support means (8) moveable by means of displacing means and having an arm (11) pivotably mounted thereon on which working tools, for example a milling cutter (12), a gripper or the like, as well as a inspection device, particularly formed by a camera, are displaceably supported, **characterised in that** the support means is formed by a rotor (8) rotatably mounted within an integral carriage (1) equipped with propelling mechanisms (2,3), and that the inspection device (13) mounted on the rotor (8) is coupled to the arm (11) for common pivoting movement.

2. Device according to claim 1, characterised in that the support means (8) is connected to the arm (11) by means of a Cardan joint (10), and that at least two displacing means are provided for controlled displacement of the Cardan joint (10).

3. Device according to claim 1 or 2, characterised in that the displacing means for the support means (8) and/or for the Cardan joint (10) are formed by toothed racks which are slidable, preferably by a plunger operated by a pressure medium, and which are engaged by teeth provided on said support means (8) and/or said Cardan joint (11).

4. Device according to any of claims 1 to 2, characterised in that the displacing means are formed by a prime mover operated by a pressure medium, the shaft of which effecting rotation of the support means (8) and/or said Cardan joint (11).

5. Device according to any of claims 1 to 4, characterised in that said carriage (1) is tubular, and that the propelling mechanisms (2,3) are radially extendible from the periphery of the tube, at least one propelling mechanism being preferably driven by a prime mover operated by a pressure medium.

6. Device according to any of claims 1 to 5, characterised in that said propelling mechanisms (2) comprise caterpillars (5).

7. Device according to any of claims 1 to 6, characterised in that said rotor (8) is supported within the carriage (1) which is in tube form, and that the displacing means for the rotor is also arranged within said carriage (1).

## Revendications

1. Dispositif mobile pour travaux et/ou inspecter des parois d'une structure tubulaire, comme un égout, une conduite d'eau, un forage etc., comprenant un support (8) déplaçable par un dispositif de déplacement et ayant un bras (11) monté de manière pivotante, auquel des outils d'usinage, par exemple une fraise, une griffe ou analogue, ainsi qu'un dispositif d'inspection, particulièrement formé par une caméra, sont logés de manière déplaçable, **caractérisé en ce** que le support est formé par un rotor (8) logé de manière rotative dans un chariot (1) indivisé muni des bogies (2,3), et en ce que le dispositif d'inspection (13) monté au rotor (8) est couplé au bras (11) pour un mouvement pivotant commun.

2. Dispositif selon la revendication 1, caractérisé en ce que le support (8) est relié avec le bras (11) par un joint de Cardan (10), et qu'au moins deux dispositifs de déplacement sont prévus pour le déplacement contrôlé du joint de Cardan (10).

3. Dispositif selon la revendication 1 ou 2, caractérisé en ce que les dispositifs de déplacement du support (8) et/ou du joint de Cardan (10) sont formés par des crémaillères déplaçables, préférablement par un piston actué par un milieu sous pression, engrenées par des dents prévus au support (8) et/ou au joint de Cardan (11).

4. Dispositif selon la revendication 1 ou 2, caractérisé en ce que les dispositifs de déplacement sont formés par un moteur actué par un milieu sous pression, l'arbre de ceci effectuant une rotation du support (8) et/ou du joint de Cardan (11).

5. Dispositif selon une des revendications 1 à 4, caractérisé en ce que le chariot (1) est tubulaire , et que les bogies (2,3) sont déployable radialement de la périphérie du tube, au moins un bogie étant, de préférence, capable d'être entraîné par un moteur actué par un milieu sous pression.

6. Dispositif selon une des revendications 1 à 5, caractérisé en ce que les bogies (2) ont des chenilles (5) de commande.

7. Dispositif selon une des revendications 1 à 6, caractérisé en ce que le rotor (8) est logé dans le chariot (1) tubulaire, et que le dispositif de déplacement du rotor et lui aussi disposé dans le chariot (1).
